# EUROPEAN PATENT SPECIFICATION

(11) **EP 2 826 624 B1**
(45) Date of publication and mention of the grant of the patent: **03.05.2017**
(21) Application number: 13176544.8
(22) Date of filing: 15.07.2013
(51) Int. Cl.: B32B 27/32, B32B 27/20, B32B 27/08, B32B 27/30, B32B 27/18, C08K 3/26

(54) **Stretch film comprising calcium carbonate**
Dehnfolie enthaltend Calciumcarbonat
Film étirable comprenant du carbonate de calcium

(43) Date of publication of application: 21.01.2015
(73) Proprietor: Trioplast AB, 333 00 Smålandsstenar (SE)
(72) Inventor: Mattsson, Robert, 471 95 SKÄRHAMN (SE); Runesson, Torbjörn, 333 33 SMÅLANDSSTENAR (SE); Bengtsson, Magdalena, 314 31 HYLTEBRUK (SE)
(74) Representative: Awapatent AB

(56) References cited:
- EP-A2- 0 408 971
- WO-A1-2008/006199
- US-A- 4 350 655
- US-A- 6 114 024
- US-A1- 2001 018 465
- US-A1- 2005 043 460
- DATABASE WPI Week 200935 Thomson Scientific, London, GB; AN 2009-F45346 XP002715137, & CN 101 362 831 A (QUANZHOU LICHANG PLASTIC CO LTD) 11 February 2009 (2009-02-11)

## Description

### FIELD OF THE INVENTION

The present invention relates to stretch films used for wrapping and packaging objects.

### BACKGROUND OF THE INVENTION

Plastic film is used for many different purposes. For example, plastic stretch film is frequently used in different fields of application, in particular for wrapping various products, for example wrapping goods for shipping or storing, or for wrapping agricultural bulk products, such as grass, straw, various crops, etc. In agricultural applications, stretch film may for instance be used as fodder protection and silage film. For the production of silage, anaerobic conditions are desirable, and so the film should provide a barrier against moisture and oxygen.

Conventionally, stretch films are made primarily of one or more polymers, in particular polyolefins (e.g. polyethylene), usually with various additives such as pigments, tackifiers, UV stabilizers, etc, to meet the requirements of the intended application. WO 2008/006199 discloses a pigmented thermoplastic film, useful for industrial packaging, comprising one or more mineral filler agents to prevent or reduce the occurrence of discolouration when the film is stretched, or to prevent the loss of mechanical properties of the film. Stretch film for silage productions requires e.g. a good UV stabilization of the film material, high cling, and high mechanical performance in terms of good resistance to puncturing and tearing.

Various methods to provide good barrier properties against moisture and oxygen are known in the art, there among sandwiching of a layer of an ethylene/vinyl alcohol copolymer between two layers of polyalkenes, or incorporation of a metal foil into the film structure, and incorporation of a layer comprising a particulate filler in a film structure. For example, WO 97/23350 describes a polymeric film comprising at least one layer of a thermoplastic polymer having thereon a layer of a dispersion of a particulate filler in a dispersant which may be partially migratory into the thermoplastic polymer layer. The dispersant comprises a tackifier. However, in spite of the content of tackifier, the film disclosed in WO 97/23350 is likely to suffer from poor adhesion of the layer of particular filler.

Hence, there is still a need in the art for stretch films offering good UV stabilization, high cling, high mechanical performance, and good barrier properties against moisture and oxygen, at a reasonable production cost.

### SUMMARY OF THE INVENTION

It is an object of the present invention to at least partly overcome the problems in the prior art, and to provide a stretch film with properties acceptable for use in agriculture which can be produced at a relatively low cost.

According to a first aspect of the invention, this and other objects are achieved by a multi-layer stretch film comprising a core layer and two exterior layers sandwiching the core layer. The core layer comprises calcium carbonate at a content of from 0.1 to 10 % by weight based on the total weight of the multi-layer stretch film and from 0.5 to 5 % by weight based on the total weight of the core layer, and a polyolefin. In particular, the core layer comprises linear low density polyethylene at a content of from 70 to 95 % by weight based on the total weight of the core layer. The exterior layers have a content of calcium carbonate of less than 0.1 % by weight based on the total weight of the multi-layer stretch film. The multi-layer stretch film is an agricultural bale wrap film or silage film.

An advantage of the stretch film according to the present invention is lower raw material costs. An additional advantage is a potential saving in energy due to a decreased content of polyolefins and thus a potential decreased need in melting heat and demand of cooling, respectively, during production of the stretch film.

In comparison to known films comprising calcium carbonate as anti-blockers, it is of importance for the stretch film according to the present invention to have a satisfactory cling level. In order to achieve the desired cling level, it is beneficial to use exterior layers having a smooth exterior surface. Smoothness may be due, at least partly, to lack of calcium carbonate in the exterior layers.

By the term "cling" is meant the ability of a material to adhere to itself or an adjacent object. The adjacent object may be a layer of the same or a different film.

In comparison to known films comprising calcium carbonate for making the film porous or breathable, the stretch film according to embodiments of the present invention comprising calcium carbonate may function as a barrier for fluids, especially as a barrier for gases. Typically, the stretch film according to embodiments of the present invention allows an anaerobic environment to be formed and thereby nutrients and energy content to be preserved during storage. A silage film should form a barrier for oxygen gas. Typically, a silage film has an oxygen permeability of less than 1700 cm³/m²/24 h, such as within the range of from 1450 to 1700 cm³/m²/24 h measured according to the standard ASTM D-1434.

In known films comprising calcium carbonate, the calcium carbonate is allowed to aggregate in order to making the film porous or breathable. In contrast, the calcium carbonate used in the stretch film according to embodiments of the present invention is adapted to mix with the polyolefin without aggregation. To this end the particles of calcium carbonate may be surface modified, e.g. coated, for example with an organic compound, in order to improve compatibility or miscibility with the polyolefin. Hence, the dispersion of the calcium carbonate particles in the polyolefin is improved in relation to prior art film containing calcium carbonate. In some embodiments of the present invention, the calcium carbonate particles may be substantially monodisperse. For example, a majority of the particles may be individually dispersed, not forming part of an aggregation of particles.

The stretch film according to embodiments of the present invention may have improved, or at least maintained, properties with regard to UV stabilization, cling level, mechanical performance, such as tensile strength, tear strength and puncture resistance, and opacity compared to the stretch films known in the prior art.
By the term "UV stabilization" is meant protection of a material from the long-term degradation effects from light, most frequently ultraviolet radiation (UV). By the term "mechanical performance" is herein mainly meant the mechanical strength of the material, measured in terms of at least one of tensile strength, tear strength and puncture resistance. Tensile strength, measured as force per unit area, is defined as the maximum stress that a material can withstand while being stretched or pulled before failing or breaking. Tear strength, typically measured as force per unit length, is defined as the resistance of a material to the growth of e.g. a cut when under tension. Elongation at break is defined as the ultimate elongation (given as percentage of the initial length) of a material before it breaks under tension. Puncture resistance, typically measured as mass per unit length, is defined as the relative ability of a material to withstand a falling dart without breaking.
According to the invention, the polyolefin comprises a linear low density polyethylene, the linear low density polyethylene being present at a content of from 70 to 95 % by weight based on the total weight of the core layer.
According to an embodiment, at least one of the two exterior layers comprises a soft polymer. A soft polymer may provide a relatively soft surface to the at least one of the two exterior layers which may increase friction, and reduce slip in a direction substantially parallel to the film surface. A soft polymer may be advantageous when the multi-layer stretch film is e.g. wrapped with an overlap, such that the film may adhere, or cling, to itself.

According to the invention, the exterior layers have a content of calcium carbonate of less than 0.1 % by weight based on the total weight of the multi-layer stretch film. Preferably, the exterior layers are substantially free from calcium carbonate. The very low content of calcium carbonate in the exterior layers serves to improve the smoothness of the exterior layers which is advantageous for the cling. Further, the very low content of calcium carbonate in the exterior layers serves to improve the barrier for fluids, especially for gases, by preventing porosity to appear in the exterior layers.

According to an embodiment, the multi-layer stretch film may comprise a tackifier. By the term "tackifier" is herein meant an agent that provides cling to a film. Such an agent may be added to a layer of the multi-layer stretch film in order to increase the cling of the layer. For instance, a tackifier may be a soft polymer, or a migrating tackifier. A tackifier thus serves to increase the cling of the multi-layer stretch film, in particular, of the exterior layers.

According to an embodiment, the tackifier is a migrating tackifier. By the term "migrating tackifier" is herein meant a tackifier which is soluble in the film material, e.g. in polyethylene. If a migrating tackifier is added to a film (or film layer) in an amount exceeding the solubility level of the film (or film layer), the excess can migrate within the film material to the film surface (including also migrating from a first layer to and through a another layer, when the first layer has been saturated with the migrating tackifier). A migrating tackifier may thus provide an adhesive surface which increases the friction in a direction substantially perpendicular to the film surface. A migrating tackifier may be advantageous when the multi-layer stretch film is e.g. wrapped, such that an exterior layer of a first portion of the multi-layer stretch film adhere, or cling, to an exterior layer of a second portion of the same, or a different, multi-layer stretch film.

According to an embodiment, the migrating tackifier is present at a content of from 1 to 15 % by weight based on the total weight of the core layer. The content of migrating tackifier added to the core layer typically exceeds the content of migrating tackifier required to saturate the core layer with regard to the migrating tackifier. The content required to saturate the core layer may depend on the content of polyethylene and other polyolefins, in which the migrating tackifier is soluble, in the core layer. According to an embodiment, the multi-layer stretch further comprises an agent being selected from an additional pigment and a UV stabilizer. An additional pigment may be advantageous for varying the color and/or the opacity of the multi-layer stretch film further. A UV stabilizer may be advantageous for preventing chain reactions caused by e.g. radicals within the polyolefin layer(s) of the multi-layer stretch film e.g. during storage outdoors of the multi-layer stretch film.

According to an embodiment, the multi-layer stretch film comprises from 2 to 5 core layers. However, the multi-layer stretch film may comprise from 1 to up to 20 core layers.

According to an embodiment, the core layer has a thickness in the range of from 0.5 to 45 µm. In embodiments where the film comprises multiple core layers, each core layer may have a thickness within the range of from 0.5 µm to 45 µm. Typically, the thickness of the total number of core layers is less than 45 µm. The multi-layer stretch film (i.e., including all core layers and the exterior layers) may have a total thickness within the range of from 8 to 50 µm.

The thickness values given throughout this specification refer to the thickness of the multi-layer stretch film or a specific layer of the multi-layer stretch film after the stretch film is stretched during its production (so-called pre-stretching).

According to an embodiment, the multi-layer stretch film has an oxygen permeability of less than 1700 cm³/m²/24 h. Since the multi-layer stretch film serves as an agricultural film, e.g. a silage film, good barrier properties to oxygen and other gases are important. Typically, a silage film has an oxygen permeability of less than 1700 cm³/m²/24 h, such as within the range of from 1450 to 1700 cm³/m²/24 h measured according to the standard ASTM D-1434.
According to an embodiment, the multi-layer stretch film has a transparency of at most 75 % e.g. within the range of 50 from 75 % or from 63 to 73 %. Advantageously, the multi-layer stretch film is not transparent enough for a human eye or animal eye to see through it. A certain level of opacity may be advantageous with regard to protection against noxious animals, such as vermin, birds, and insects, which may harm either the multi-layer stretch film or the material being stored inside an arrangement of the multi-layer stretch film, e.g. a bale of silage.
According to the invention, the multi-layer stretch film is an agricultural bale wrap film or silage film.

According to an embodiment, the multi-layer stretch film is non-porous. A non-porous multi-layer stretch film may be substantially impermeable to fluids. A non-porous multi-layer stretch film is advantageous for creating an anaerobic environment, e.g. for silage making.

There is also provided a masterbatch comprising calcium carbonate at a content of from 40 to 80 % by weight based on the total weight of the masterbatch, and polyolefin, in particular polyethylene, at a content of from 10 to 50 %, and typically from 10 to 40 %, by weight based on the total weight of the masterbatch. The masterbatch may comprise one or more additional components.

In another aspect, the invention provides a process of manufacturing a multi-layer stretch film, said film being an agricultural bale wrap film or silage film, which may be a film as described above. The process comprises the steps of:
a) providing a first extrudible composition comprising at least one polyolefin and calcium carbonate;
b) providing at least one additional extrudible composition comprising at least one polymer;
c) extruding the first composition obtained in step a) to form a core layer; and
d) extruding the at least one additional extrudible composition to form two exterior layers on opposing sides of the core layer.

The core layer comprises calcium carbonate at a content of from 0.1 to 10 % by weight based on the total weight of the multi-layer stretch film, and from 0.5 to 5 % by weight based on the total weight of the core layer, and linear low density polyethylene at a content of from 70 to 95 % by weight based on the total weight of the core layer. The exterior layers have a content of calcium carbonate of less than 0.1 % by weight based on the total weight of the multi-layer stretch film.

The process of manufacturing a multi-layer stretch film according to the present invention allows for lower raw material costs. An additional advantage is a potential saving in energy due to a potential decreased need in melting heat and demand of cooling, respectively, during manufacturing of the stretch film. According to an embodiment, steps c) and d) are performed simultaneously by co-extrusion.

Disclosed herein is also the use of a multi-layer stretch film as described herein. In particular, the multi-layer stretch film may be used as an agricultural film, such as a silage film or a balewrap.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Fig. 1 shows a multi-layer stretch film according to a first embodiment of the present invention in cross-section.
Fig. 2 shows a multi-layer stretch film according to a second embodiment of the present invention in cross-section.

As illustrated in the figures, the sizes of layers and regions are exaggerated for illustrative purposes and, thus, are provided to illustrate the general structures of embodiments of the present invention. Like reference numerals refer to like elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The present inventors have found that a multilayer stretch film comprising at least one core layer and two exterior layers sandwiching the core layer, wherein the core layer, in addition to at least one polyolefin, comprises calcium carbonate at a content of from 0.1 to 10 % by weight provides good or excellent properties for use in various application.

A film comprising more than one layer may be called a multi-layer film. The multi-layer stretch film according to the present invention comprises at least three layers: at least one core layer arranged between two exterior layers.

The multi-layer stretch film may comprise from 1 to 5 core layers. In embodiments, where the multi-layer stretch film comprises more than one core layer, the core layers may have the same composition. Alternatively, the more than one core layers may differ in composition compared to each other.

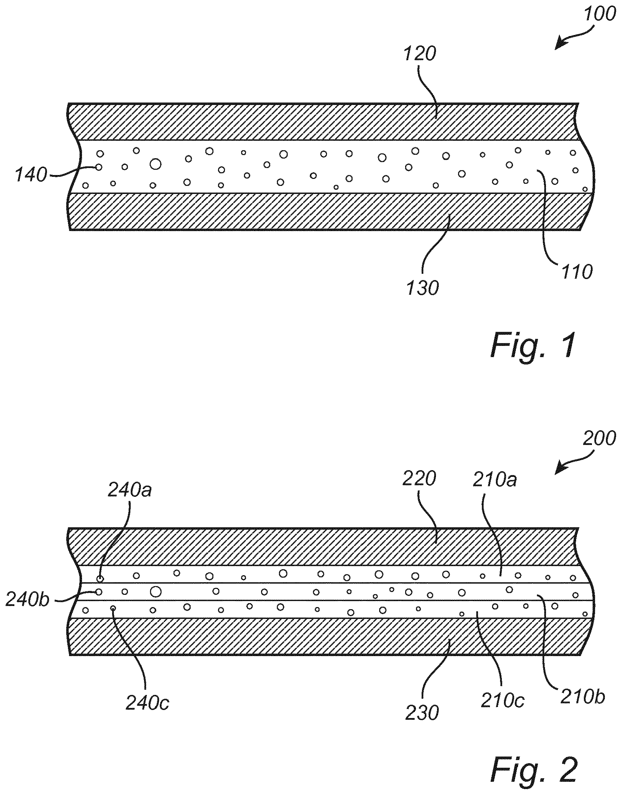

As an illustrative example, Fig. 1 shows a multi-layer stretch film 100 comprising three layers: two exterior layers 120, 130 and one core layer 110 sandwiched in between the exterior layers. The core layer 110 comprises calcium carbonate 140. The exterior layers 120, 130 are essentially free from calcium carbonate.

As another example, Fig. 2 shows a multi-layer stretch film 200 comprising five layers: two exterior layers 220, 230 and three core layers 210a, 210b, 210c sandwiched in between the exterior layers. The core layers 210a, 210b, 210c comprise calcium carbonate 240a, 240b, 240c. Typically, although not necessarily, the total content of calcium carbonate is about equally distributed between the core layers 210a, 210b, 210c. The exterior layers 220, 230 are essentially free from calcium carbonate.

The two exterior layers may have the same or similar composition. Alternatively, the two exterior layers may differ in composition compared to each other.

The stretch film may be either blown or cast. A blown stretch film has been melted and thereafter air-cooled when blown out. A cast stretch film has been cooled over cooling rollers.

The at least one core layer may form from 50 % to 90 %, such as from 70 % to 80 %, by weight of total weight of the multi-layer stretch film. In a multi-layer stretch film comprising one core layer, the one core layer may form from 50 % to 90 %, such as from 70 % to 80 % by weight of the total weight of the multi-layer stretch film. In a multi-layer stretch film comprising more than one core layer, the total number of core layers may form from 50 % to 90 %, such as from 70 % to 80 %, by weight of total weight of the multi-layer stretch film.

The two exterior layers may together form from 10 % to 50 %, such as from 20 % to 30 % by weight of the total weight of the multi-layer stretch film. Typically, the exterior layers each forms about 10 % by weight of total weight of the multi-layer stretch film.

The multi-layer stretch film may have a total film thickness within the range of from 8 µm to 50 µm, such as from 15 µm to 35 µm, for example about 25 µm. The thickness of the two exterior layers may be within the range of from 1 µm to 10 µm, such as from 2 µm to 5 µm, for example from 2 µm to 3 µm. The thickness of the at least one core layer may be within the range of from 4 to 45 µm, such as from 5 µm to 30 µm, for example from 10 µm to 20 µm.

In an embodiment, the multi-layer stretch film comprises one core layer. The thickness of the one core layer may be within the range of from 4 to 45 µm, such as from 5 µm to 30 µm, for example from 10 µm to 20 µm. Alternatively, the multi-layer stretch film may comprise more than one core layer. The thickness of the total number of core layers may be within the range of from 4 to 45 µm, such as from 5 µm to 30 µm, for example from 10 µm to 20 µm.

In an example, a multi-layer stretch film comprising one core layer and two exterior layers sandwiching the core layer may have a total film thickness of 25 µm. The core layer may have a thickness of 20 µm and each of the exterior layers has a thickness of 2.5 µm.
The multi-layer stretch film according to the present invention comprises at least one polyolefin. Examples of polyolefins are polyethylenes, e.g. linear low density polyethylene (LLDPE), low density polyethylene (LDPE), and very low density polyethylene (VLDPE), as well as polypropylenes and polybutylenes. The core layer and the exterior layers may have different compositions with respect to the polyolefin(s). At least one of the exterior layers may comprise a polymer such as ethylene vinyl acetate copolymer (EVA) or ethylmethacrylate copolymer (EMA).

The at least one core layer comprises from 70 to 95 % by weight of linear low density polyethylene (LLDPE) based on the total weight of the at least one core layer. For instance, the at least one core layer comprises LLDPE at a content of from 75 to 90 % such as about 80 % by weight based on the total weight of the core layer. LLDPE is typically used in stretch films due to its favorable characteristics in respect of e.g. tensile strength, elongation at break and puncture resistance.
The at least one core layer may further comprise low density polyethylene (LDPE) at a content of from 0.1 to 10 % by weight based on the total weight of the at least one core layer. For instance, the at least one core layer may comprise LDPE at a content of from 1 to 8 %, such as about 5 %, by weight based on the total weight of the core layer.

The at least one core layer comprises calcium carbonate at a content of from 0.5 to 5 % by weight based on the total weight of the at least one core layer.

The at least one core layer may comprise calcium carbonate at a content of from 0.5, 1, 1.5, 2, 2.5, 3, 3.5, 4, or 4.5 % by weight based on the total weight of the at least one core layer. Throughout the specification, the weight percentage of calcium carbonate refers to solid calcium carbonate. The weight of the solid calcium carbonate includes the weight of any surface modification etc, since the weight of a surface modification should represent a very minor contribution to the total weight of the solid calcium carbonate.

Calcium carbonate is typically provided as a particulate material. The particulate material typically has a generally spherical shape (rather than a flake-like or needle-like shape). Thus, the average particle size may be represented by the average diameter of the calcium carbonate particles. The average particle size (D50) and the top cut (D98) of the calcium carbonate indicate the particle size below which 50 % and 98 % by weight of the particles fall, respectively. The D50 and D98 values, respectively, may be determined by a sedimentation method analyzing the sedimentation behavior in a gravimetric field. An example of an instrument which may be used is Sedigraph 5100. Alternatively, the D50 and D98 values, respectively, may be determined by a sieving method or a sizing method. An example of an instrument which may be used is a sieve. Generally, the methods and the instruments are known to the person skilled in the art and are common within the present field of technology. Examples of a suitable average particle size (D50) for the particles of calcium carbonate are within the range of 0.5 µm to 5 µm, such as from 0.9 µm to 4 µm. As a non-limiting example, calcium carbonate particles having an average particle size (D50) of 1.6 µm or 1.7 µm may be used. Examples of a suitable top cut particle size (D98) for the particles of calcium carbonate are within the range of 5 µm to 20 µm, such as from 6 µm to 12 µm. Specific examples of suitable top cut particle size (D98) for the particles of calcium carbonate also include 6.5 µm and 7 µm.

The calcium carbonate may be unmodified. However, typically, the calcium carbonate may be modified, e.g. by a surface treatment or coating. For instance, a surface treatment may imply that a non-polar surface or a low-polar surface is formed. An example of an unmodified calcium carbonate is Myanit 010 (Omya AB, Sweden). Examples of surface-modified calcium carbonate are Omyafilm 707FO (Omya OY,Finland), Microcarb WM1T (Reverté, Spain), and Zetafil cst CA (Microfill, Greece).

The multi-layer stretch film according to the invention comprises two exterior layers. The exterior layers sandwich the at least one core layer, i.e. the core layer is arranged between two exterior layers. By "exterior layer" is meant a layer forming at least part of a surface of the film. The exterior layers may be of identical or similar composition, or may differ in composition. Typically however an exterior layer comprises a thermoplastic polymer, such as a polyolefin, as a base material. Examples of suitable base materials for an exterior layer include polyethylene, especially LLDPE or VLDPE, and ethylene-vinyl acetate co-polymer. The exterior layers may be substantially free from calcium carbonate, and may thus typically be smooth. Optionally the exterior layers may be transparent.

Typically, at least one of the two exterior layers has a certain cling. In some embodiments, one exterior layer may have a higher degree of cling than an exterior layer arranged on the opposite side of the core layer.
In embodiments of the invention, the multi-layer stretch film may comprise a tackifier. Typically at least one of the exterior layers may comprise a tackifier. Conventional tackifiers, known to the person skilled in the art, may be added to the multi-layer stretch film. Examples of conventional tackifiers include soft polymers and migrating tackifiers. A soft polymer may provide a relatively soft surface which may increase friction, and reduce slip in a direction substantially parallel to the film surface. A migrating tackifier, on the other hand, may provide an adhesive surface that increases the friction in a direction substantially perpendicular to the film surface.

Examples of suitable soft polymers include ethylene vinyl acetate co-polymer (EVA), ethyl methacrylate co-polymer (EMA) and very low density polyethylene (VLDPE). Hence, in embodiments where an exterior layer comprises EVA, EMA, or VLDPE as a base material, this may provide sufficient cling, such that it may not be necessary to add a further tackifier. Optionally however, a layer comprising a soft polymer may also comprise a migrating tackifier.

In an example, the cling of at least one of the exterior layers may be achieved by the use of a soft polymer, or a combination of soft polymers, in at least one of the two exterior layers.

VLDPE may be added to at least one exterior layer in order to provide cling to the at least one exterior layer. In an embodiment, the content of VLDPE may be up to 100 % by weight of the at least one exterior layer. For instance, one of the two exterior layers may consist of 100 % VLDPE.

The soft polymer EVA may be used in combination with the migrating tackifier PIB in order to provide cling to at least one exterior layer. For example, PIB may be added to the core layer at a content that is sufficient to allow migration to the exterior surface of at least one of the exterior layers upon saturation of the core layer and the at least one exterior surface. EVA may be comprised in the at least one exterior layer. An advantage of combining a soft polymer, e.g. EVA, and a migrating tackifier, e.g. PIB, in at least one exterior layer is that the cling may be improved due to increased resistance of the exterior layer to forces both substantially parallel as well as substantially perpendicular to the exterior surface of the exterior layer.

Suitable contents of at least one of a migrating tackifier, a soft polymer and a combination thereof, in the at least one core layer and/or in any or both of the two exterior layers of the multi-layer stretch film are known to the person skilled in the art.

A migrating tackifier may migrate within a material, including within a single layer, as well as from one layer to an adjacent layer. In embodiments of the present invention, a migrating tackifier may migrate from any one of the layers of the multi-layer stretch film (e.g. the core layer) to the film surface of the multi-layer stretch film (typically the surface of an exterior layer). An example of a migrating tackifier is polyisobutylene (PIB).

A migrating tackifier may be added to one or more layers of the multi-layer stretch film, typically including the thickest layer(s) of the multi-layer stretch film. When the multi-layer stretch film comprises more than one core layer, the migrating tackifier may be added to one or more, including all, of the core layers. Alternatively, the migrating tackifier may be added to the thickest of the core layers. Upon saturation of the thickest layer(s) with regard to the migrating tackifier, the excess of migrating tackifier may migrate into adjacent layer(s). For example, the migrating tackifier may be initially added to the core layer, and upon saturation of the core layer, the excess of migrating tackifier may migrate into the two exterior layers sandwiching the core layer. Typically, also the exterior layers are saturated with the migrating tackifier, thereby allowing the migrating tackifier to migrate through the exterior layers and accumulate at the exterior surfaces of the exterior layers providing cling.

The cling of at least one of the exterior layers may be achieved by addition of a migrating tackifier to the at least one core layer. The migrating tackifier will initially be comprised in the core layer, and over time migrate to the exterior layers. The content of migrating tackifier added to the at least one core layer may exceed the content of migrating tackifier required to saturate the at least one core layer with regard to the migrating tackifier.

The migrating tackifier may be soluble in polyethylene and other polyolefins. Thus, the content required to saturate the at least one core layer may depend on the content of polyethylene and other polyolefins, in which the migrating tackifier is soluble, in the at least one core layer.

The at least one core layer may comprise migrating tackifier, e.g. in the form of polyisobutylene (PIB), at a content of from 0 to 15 % by weight, e.g. from 1 to 15 % by weight, such as from 3 to 7 % by weight, based on the total weight of the at least one core layer. In an embodiment, the at least one core layer comprises approximately 5 % by weight of PIB.

More specifically, in an embodiment, the multi-layer stretch film comprises only one core layer. A migrating tackifier, e.g. in the form of PIB, may be present in the core layer at a content of from 0 to 15 % by weight, e.g. from 1 to 15 % by weight, such as from 3 to 7 % by weight, based on the total weight of the one core layer. The one core layer may comprise approximately 5 % by weight of PIB.

In another embodiment, the multi-layer stretch film comprises more than one core layer, such as two or more core layers arranged adjacent each other. A migrating tackifier, e.g. PIB, may be present in one or more of the core layers at a content of from 0 to 15 % by weight, e.g. from 1 to 15 % by weight, such as from 3 to 7 % by weight based on the total weight of the total number of core layers. The core layers may together comprise approximately 5 % by weight of PIB. It is envisaged that when the multi-layer stretch film comprises multiple core layers, a tackifier could initially be contained in only one of the core layers, or in several or all of the core layers. Typically however, due to the nature and purpose of a migrating tackifier, with time all of the layers may contain the tackifier, even if the tackifier was added only to one of the core layers during manufacture of the multi-layer film.

By the addition of an additional pigment to the at least one core layer, the color and the opacity of the multi-layer stretch film may be further varied. The at least one core layer may comprise an additional pigment in a range of from 0 to 10 % by weight, e.g. from 1 to 10 % by weight, based on the total weight of the at least one core layer. A multi-layer stretch film for silage, typically comprises from 2 to 5 % by weight of an additional pigment in the form of titanium dioxide (TiO₂).

White pigments provide opacity by scattering visible light. An example of a suitable white additional pigment is titanium dioxide (TiO₂). Colored pigments provide opacity by absorbing light. An example of a suitable colored additional pigment is carbon black (CB).

Alternatively, an additional pigment may be absent in the multi-layer stretch film. In such an embodiment, the multi-layer stretch film can be relatively transparent. However, the content of calcium carbonate provides a milky white appearance, thus a certain level of opacity, to the multi-layer stretch film. An exterior layer that is substantially free from calcium carbonate (e.g., comprising less than 0.1 % by weight of calcium carbonate) may be transparent.

A certain level of opacity may be advantageous with regard to protection against noxious animals, such as vermin, birds, and insects, which may harm either the multi-layer stretch film or the material being stored inside an arrangement of the multi-layer stretch film, e.g. a bale of silage. As an example, the certain level of opacity of the multi-layer stretch film may hinder a bird from observing the material of the bale of silage, thereby hinder the multi-layer stretch film from being punctured by the beak or claws of the bird. The transparency of the multi-layer stretch film is usually within the range of from 63 to 73 %, such as approximately 70 %, measured by the standard ASTM D-1003.

The multi-layer stretch film according to embodiments of the invention may comprise a UV stabilizer, contained in at least one layer of the multi-layer film. Conventional UV stabilizer, known to the person skilled in the art, may be added for example to the at least one core layer. A UV stabilizer typically traps free radicals generated in the polyolefin material by UV irradiation, and may thus prevent chain reactions within the polyolefin layer(s) of the multi-layer stretch film, which would otherwise result in degradation of the polyolefin material.

In embodiments of the invention, all layers of the multi-layer stretch film may comprise a UV stabilizer. A good UV stabilization of the film material is desirable in order to avoid that the multi-layer stretch film degrades during storage time outdoors which typically may be up to a year.

Examples of suitable UV stabilizers are Chimassorb 944 (BASF, Italy), Tinuvin 622 (BASF, Germany), and Chimassorb 2020 (BASF, Italy). An additional pigment, such as TiO₂ or CB, may also function as a UV stabilizer. The at least one core layer may comprise UV stabilizator in a range of from 0 to 0.6 % by weight based on the total weight of the at least one core layer.

The multilayer stretch film according to embodiments of the invention may be produced by a manufacturing process involving the following steps:
a) providing a first extrudible composition comprising at least one polyolefin and calcium carbonate;
b) providing at least one additional extrudible composition comprising at least one polymer;
c) extruding the first composition obtained in step a) to form at least one core layer;
d) extruding the at least one additional extrudible composition to form two exterior layers on opposing sides of the core layer.

The first extrudible composition is intended to form a core layer. The step of providing a first extrudible composition comprising at least one polyolefin and calcium carbonate may comprise two steps. Firstly, a masterbatch, typically in the form of solid granules, may be provided. Secondly, the masterbatch may be mixed with at least one polyolefin and optionally at least one additive, e.g. selected form the group consisting of: UV stabilizers, additional pigments, and tackifiers. If provided in solid form, the masterbatch is typically melted before being mixed with the at least one polyolefin and any additives.

In the context of the present invention a masterbatch is a composition comprising calcium carbonate and a polyolefin, e.g. polyethylene. Optionally, the masterbatch may also comprise an additional pigment, e.g. titanium dioxide. The masterbatch may comprise polyethylene at a content of from 10 % to 40 %, such as from 25 % to 40 %, by weight based on the total weight of the masterbatch. In some embodiments, a masterbatch may form from 1 to 10 % by weight, for example from 5 to 8 % by weight of the total weight of the first extrudible composition.

The masterbatch may be formed into a granulate material and stored as such until further use. A process for producing the masterbatch typically comprises the steps of mixing the calcium carbonate, polyolefin and any optional additives, melting the obtained mixture, extruding the melted mixture, cooling and granulating the extruded mixture into a granulate material.

The at least one additional extrudible composition is typically intended to form one of the exterior layers or both exterior layers. The step of providing at least one additional extrudible composition comprising at least one polymer may imply providing a second extrudible composition comprising at least one polymer. Optionally, also a third extrudible composition comprising at least one polymer may be provided. In particular, in embodiments where the exterior layers have different composition, the second extrudible composition is intended to form one of the exterior layers, and the third extrudible composition is intended to form the other one of the exterior layers.

For example, the second extrudible composition may be provided by mixing a soft polymer with optionally at least one additive selected form the group consisting of: UV stabilizers and tackifiers. The second extrudible composition is typically adapted to provide cling. The third extrudible composition may be provided by mixing a polyolefin, e.g. a polyethylene, with optionally at least one additive selected form the group consisting of: UV stabilizers and tackifiers. The third extrudible composition may be adapted to provide a low friction surface.

Optionally, a single additional extrudible composition may be provided, which may be adapted to provide cling and/or a low friction surface.

The step of extruding the first composition obtained in step a) to form at least one core layer may imply that the first composition is extruded to a single core layer or to multiple core layers. Typically, in the case of multiple core layers, the multiple core layers are extruded simultaneously by coextrusion and adhere to each other due to substantially identical chemical properties.

The step of extruding the at least one additional extrudible composition to form two exterior layers on opposing sides of the core layer may imply extruding the second extrudible composition to form a first exterior layer on a first side of the core layer and extruding the third extrudible composition to form a second exterior layer on a second side of the core layer, wherein the first side of the core layer is arranged opposite to the second side of the core layer.

Alternatively, the single additional extrudible composition is extruded to form two exterior layers on opposing sides of the core layer.

The steps of extruding the first extrudible composition to form at least one core layer and the additional extrudible composition to form two exterior layers, respectively, may be performed separately from each other e.g. by monoextrusion, or simultaneously e.g. by coextrusion. Typically, the multi-layer stretch film is prepared by co-extrusion, using one extruder per layer simultaneously. Monoextrusion and coextrusion are techniques generally known to the person skilled in the art.

### Example

A first extrudible composition was prepared by mixing a masterbatch with polyethylene. The masterbatch contained titanium dioxide at a content of 50 % by weight, coated calcium carbonate (Omyafilm 707FO, Switzerland) at a content of 12 % by weight, and a combination of LLDPE and LDPE as a carrier. Weight ratios were based on the total weight of the masterbatch.

For comparison, a conventional masterbatch typically contains titanium dioxide at 60 % by weight, and one or more types of polyethylene. A conventional masterbatch does not contain calcium carbonate.

The masterbatch was mixed with polyethylene in the form of LLDPE (Dowlex 2045S, DOW Chemical, Switzerland) at a content of 8 % by weight. Also, a migrating tackifier in the form of PIB was added at a content of 6 % by weight and UV stabilizer at a content of 0.5 % by weight, based on the total weight of the mixture. The mixture contained 8 kg of masterbatch, 6 kg of PIB, 0.5 kg of UV stabilizer and 85.5 kg of PE, thus forming the first extrudible composition. Upon mixing, the masterbatch and the additional ingredients of the first extrudible composition were provided in liquid form.

Two additional extrudible compositions, namely a second extrudible composition and a third extrudible composition, were prepared. The second extrudible composition comprised a soft polymer, i.e. EVA, at a content of 93.5 % by weight, a migrating tackifier in the form of PIB at a content of 6 % by weight, and a UV stabilizer at a content of 0.5 % by weight based on the total weight of the second extrudible composition. The third extrudible composition comprised polyethylene, i.e. a combination of LLDPE and LDPE, at a content of 99.5 % by weight, and a UV stabilizer at a content of 0.5 % by weight based on the total weight of the third extrudible composition.

The extrudible compositions were each mixed separately using blending devices or mixing devices generally known to a person skilled in the art.

By means of coextrusion, a core layer was formed of the first extrudible composition and two exterior layers sandwiching the core layer were formed of the second extrudible composition and the third extrudible composition, respectively. The core layer and the exterior layer together formed a multi-layer stretch film of a total thickness of 25 µm. The second extrudible composition provided cling to the multi-layer stretch film. The third extrudible composition provided a low friction surface to the multi-layer stretch film.

The two exterior layers each formed 10 % by weight of the total film. The core layer(s) formed 80 % by weight of the total film.

The multi-layer stretch film comprised CaCO₃ at a content of 0.67 % by weight based on the total weight of the multi-layer stretch film. The core layer alone comprised CaCO₃ at a content of 1 % by weight based on the total weight of the at least one core layer.

Several tests were performed to analyze the mechanical properties of the multi-layer stretch film according to embodiments of the present invention. The results of the tests are summarized in Table 1.

The multi-layer stretch film was a multi-layer stretch film as described in the example above. A conventional multi-layer stretch film (Triowrap, Trioplast, Sweden) substantially free from calcium carbonate was used as a comparative example in the tests.

The respective film thickness of the two stretch films was determined according to test method SS 241013 A. The dart drop values of the two stretch films were determined according to ASTM D-170. The elmendorf tear values MD (machine direction) and TD (transversal direction), respectively, of the two stretch films were determined according to SS EN ISO 6383-2:2004. The tensile strength MD and tensile strength TD, respectively, of the two stretch films was determined according ISO 527-3. The elongation at break MD and TD, respectively, of the two stretch films was determined according to test method ISO 527-3. The oxygen permeability of the tested films was determined according to ASTM D-1434. The UV stability of the tested films were studied in a weatherometer and determined according to ISO 4892-2.

The test results are presented in Table 1.

**Table 1. Mechanical properties of a conventional stretch film and a multi-layer stretch film according to an embodiment of the present invention, respectively.**

| **Film property** | **Method** | **Conventional stretch film** | **Inventive stretch film** |
|---|---|---|---|
| Thickness (µm) | SS241013A | 24.5 | 24.9 |
| Dart drop (g) | ASTM D-170 | 170 | 210 |
| Elmendorf tear MD (mN) | SS EN ISO 6383-2:2004 | 1730 | 1530 |
| Elmendorf tear TD (mN) | SS EN ISO 6383-2:2004 | 8350 | 7491 |
| Tensile strength MD (MPa) | ISO 527-3 | 30.5 | 31.0 |
| Tensile strength TD (MPa) | ISO 527-3 | 25.0 | 24.1 |
| Elongation at break MD (%) | ISO 527-3 | 490 | 500 |
| Elongation at break TD (%) | ISO 527-3 | 730 | 710 |
| Oxygen permeability (cm³/m²/24 h) | ASTM D-1434 | 1630 | 1610 |
| UV stability | ISO 4892-2 | corresponding to 18 months of outdoor exposure | corresponding to 18 months of outdoor exposure |

The inventive multilayer film exhibited mechanical properties that are highly desirable for use as a balewrap or silage film, including low oxygen permeability.

The person skilled in the art realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A multi-layer stretch film comprising a core layer and two exterior layers sandwiching said core layer, wherein said core layer comprises calcium carbonate at a content of from 0.1 to 10 % by weight based on the total weight of the multi-layer stretch film and from 0.5 to 5 % by weight based on the total weight of the core layer, and wherein said core layer comprises linear low density polyethylene at a content of from 70 to 95 % by weight based on the total weight of the core layer, and wherein said exterior layers have a content of calcium carbonate of less than 0.1 % by weight based on the total weight of the multi-layer stretch film, wherein the multi-layer stretch film is an agricultural bale wrap film or silage film.

2. A multi-layer stretch film according to claim 1, wherein said core layer comprises linear low density polyethylene at a content of from 75 to 90 % by weight based on the total weight of the core layer.

3. A multi-layer stretch film according to any of the preceding claims, wherein at least one of said two exterior layers comprises a soft polymer selected from the group consisting of ethylene vinyl acetate co-polymer (EVA), ethyl methacrylate co-polymer (EMA) and very low density polyethylene (VLDPE).

4. A multi-layer stretch film according to any of the preceding claims, wherein the film comprises a tackifier.

5. A multi-layer stretch film according to claim 4, wherein said tackifier is a migrating tackifier.

6. A multi-layer stretch film according to claim 5, wherein the migrating tackifier is present at a content of from 1 to 15 % by weight based on the total weight of the core layer.

7. A multi-layer stretch film according to any of the preceding claims, further comprising an agent being selected from an additional pigment and a UV stabilizer.

8. A multi-layer stretch film according to claim 1, wherein said multi-layer stretch film comprises from 2 to 5 core layers.

9. A multi-layer stretch film according to claim 1, wherein the multi-layer stretch film has a total thickness within the range of from 8 to 50 µm.

10. A multi-layer stretch film according to claim 1 wherein the core layer has a thickness in the range of from 0.5 to 45 µm.

11. A multi-layer stretch film according to claim 1, wherein said calcium carbonate is surface-modified.

12. A multi-layer stretch film according to claim 1, wherein said calcium carbonate is a particulate material having an average particle size (D50) in the range of from 0.5 to 5 µm and/or having a top cut particle size (D98) within the range of from 5 to 20 µm.

13. A multi-layer stretch film according to claim 1, wherein said multi-layer stretch film has an oxygen permeability of less than 1700 cm³/m²/24 h measured according to ASTM D-1434.

14. A multi-layer stretch film according to claim 1, wherein said multi-layer stretch film has a transparency within the range of from 50 to 75 % measured according to ASTM D-1003.

15. A multi-layer stretch film according to claim 1, which is non-porous.

16. A process of manufacturing a multi-layer stretch film, said film being an agricultural bale wrap film or silage film, comprising the steps of:
a) providing a first extrudible composition comprising at least one polyolefin and calcium carbonate;
b) providing at least one additional extrudible composition comprising at least one polymer;
c) extruding the first composition obtained in step a) to form a core layer;
d) extruding the at least one additional extrudible composition to form two exterior layers on opposing sides of the core layer, wherein said core layer comprises calcium carbonate at a content of from 0.1 to 10 % by weight based on the total weight of the multi-layer stretch film, and from 0.5 to 5 % by weight based on the total weight of the core layer, and linear low density polyethylene at a content of from 70 to 95 % by weight based on the total weight of the core layer, and wherein said exterior layers have a content of calcium carbonate of less than 0.1 % by weight based on the total weight of the multi-layer stretch film.

17. A process according to claim 16, wherein steps c) and d) are performed simultaneously by co-extrusion.

18. A process according to claim 16, wherein said core layer comprises linear low density polyethylene at a content of from 75 to 90 % by weight based on the total weight of the core layer.

## Patentansprüche

1. Mehrschichtige Streckfolie, umfassend eine Kernschicht und zwei äußere Schichten, zwischen denen die Kernschicht liegt, wobei die Kernschicht Calciumcarbonat mit einem Gehalt von 0,1 bis 10 Gew.-% bezogen auf das Gesamtgewicht der mehrschichtigen Streckfolie und von 0,5 bis 5 Gew.-% bezogen auf das Gesamtgewicht der Kernschicht umfasst und wobei die Kernschicht lineares Polyethylen mit niedriger Dichte mit einem Gehalt von 70 bis 95 Gew.-% bezogen auf das Gesamtgewicht der Kernschicht umfasst und wobei die äußeren Schichten einen Gehalt von Calciumcarbonat von weniger als 0,1 Gew.-% bezogen auf das Gesamtgewicht der mehrschichtigen Streckfolie aufweisen, wobei die mehrschichtige Streckfolie eine landwirtschaftliche Ballen-Einwickelfolie oder Silagefolie ist.

2. Mehrschichtige Streckfolie gemäß Anspruch 1, wobei die Kernschicht lineares Polyethylen mit niedriger Dichte mit einem Gehalt von 75 bis 90 Gew.-% bezogen auf das Gesamtgewicht der Kernschicht umfasst.

3. Mehrschichtige Streckfolie gemäß einem der vorstehenden Ansprüche, wobei wenigstens eine der beiden äußeren Schichten ein weiches Polymer ausgewählt aus der Gruppe bestehend aus EthylenVinylacetat-Copolymer (EVA), Ethyl-Methacrylat-Copolymer (EMA) und Polyethylen mit sehr niedriger Dichte (VLDPE) umfasst.

4. Mehrschichtige Streckfolie gemäß einem der vorstehenden Ansprüche, wobei die Folie einen Klebrigmacher umfasst.

5. Mehrschichtige Streckfolie gemäß Anspruch 4, wobei der Klebrigmacher ein wandernder Klebrigmacher ist.

6. Mehrschichtige Streckfolie gemäß Anspruch 5, wobei der wandernde Klebrigmacher mit einem Gehalt von 1 bis 15 Gew.-% bezogen auf das Gesamtgewicht der Kernschicht vorhanden ist.

7. Mehrschichtige Streckfolie gemäß einem der vorstehenden Ansprüche, ferner umfassend ein Mittel ausgewählt aus einem zusätzlichen Pigment und einem UV-Stabilisator.

8. Mehrschichtige Streckfolie gemäß Anspruch 1, wobei die mehrschichtige Streckfolie von 2 bis 5 Kernschichten umfasst.

9. Mehrschichtige Streckfolie gemäß Anspruch 1, wobei die mehrschichtige Streckfolie eine Gesamtdicke in dem Bereich von 8 bis 50 µm aufweist.

10. Mehrschichtige Streckfolie gemäß Anspruch 1, wobei die Kernschicht eine Dicke in dem Bereich von 0,5 bis 45 µm aufweist.

11. Mehrschichtige Streckfolie gemäß Anspruch 1, wobei das Calciumcarbonat oberflächenmodifiziert ist.

12. Mehrschichtige Streckfolie gemäß Anspruch 1, wobei das Calciumcarbonat ein partikelförmiges Material mit einer mittleren Partikelgröße (D50) in dem Bereich von 0,5 bis 5 µm ist und/oder eine Obergrenze der Partikelgröße (D98) in dem Bereich von 5 bis 20 µm aufweist.

13. Mehrschichtige Streckfolie gemäß Anspruch 1, wobei die mehrschichtige Streckfolie eine Sauerstoffdurchlässigkeit von weniger als 1700 cm³/m²/24 h, gemessen gemäß ASTM D-1434, aufweist.

14. Mehrschichtige Streckfolie gemäß Anspruch 1, wobei die mehrschichtige Streckfolie eine Transparenz in dem Bereich von 50 bis 75 %, gemessen gemäß ASTM D-1003, aufweist.

15. Mehrschichtige Streckfolie gemäß Anspruch 1, die nichtporös ist.

16. Verfahren zum Herstellen einer mehrschichtigen Streckfolie, wobei die Folie eine landwirtschaftliche Ballen-Einwickelfolie oder Silagefolie ist, umfassend die Schritte:
a) Bereitstellen einer ersten extrudierbaren Zusammensetzung, die wenigstens ein Polyolefin und Calciumcarbonat umfasst;
b) Bereitstellen wenigstens einer zusätzlichen extrudierbaren Zusammensetzung, die wenigstens ein Polymer umfasst;
c) Extrudieren der bei Schritt a) erhaltenen ersten Zusammensetzung, um eine Kernschicht zu bilden;
d) Extrudieren der wenigstens einen zusätzlichen extrudierbaren Zusammensetzung, um zwei äußere Schichten an gegenüberliegenden Seiten der Kernschicht zu bilden,
wobei die Kernschicht Calciumcarbonat mit einem Gehalt von 0,1 bis 10 Gew.-% bezogen auf das Gesamtgewicht der mehrschichtigen Streckfolie und von 0,5 bis 5 Gew.-% bezogen auf das Gesamtgewicht der Kernschicht und lineares Polyethylen mit niedriger Dichte mit einem Gehalt von 70 bis 95 Gew.-% bezogen auf das Gesamtgewicht der Kernschicht umfasst und wobei die äußeren Schichten einen Gehalt von Calciumcarbonat von weniger als 0,1 Gew.-% bezogen auf das Gesamtgewicht der mehrschichtigen Streckfolie aufweisen.

17. Verfahren gemäß Anspruch 16, wobei die Schritte c) und d) gleichzeitig durch Coextrusion durchgeführt werden.

18. Verfahren gemäß Anspruch 16, wobei die Kernschicht lineares Polyethylen mit niedriger Dichte mit einem Gehalt von 75 bis 90 Gew.-% bezogen auf das Gesamtgewicht der Kernschicht umfasst.

## Revendications

1. Film étirable multicouche comprenant une couche centrale et deux couches extérieures entre lesquelles ladite couche centrale est positionnée en sandwich, dans lequel ladite couche centrale comprend du carbonate de calcium à une teneur de 0,1 à 10 % en poids relativement au poids total du film étirable multicouche et de 0,5 à 5 % en poids relativement au poids total de la couche centrale, et dans lequel ladite couche centrale comprend un polyéthylène de basse densité linéaire à une teneur de 70 à 95 % en poids relativement au poids total de la couche centrale, et dans lequel lesdites couches extérieures ont une teneur en carbonate de calcium inférieure à 0,1 % en poids relativement au poids total du film étirable multicouche, le film étirable multicouche étant un film agricole d'enveloppement de balles ou d'ensilage.

2. Film étirable multicouche selon la revendication 1, dans lequel ladite couche centrale comprend un polyéthylène de basse densité linéaire à une teneur de 75 à 90 % en poids relativement au poids total de la couche centrale.

3. Film étirable multicouche selon l'une quelconque des revendications précédentes, dans lequel au moins une desdites deux couches extérieures comprend un polymère mou sélectionné dans le groupe constitué d'un copolymère d'éthylène-acétate de vinyle (EVA), d'un copolymère de méthacrylate d'éthyle (AME) et d'un polyéthylène de très basse densité (VLDPE).

4. Film étirable multicouche selon l'une quelconque des revendications précédentes, le film comprenant un agent collant.

5. Film étirable multicouche selon la revendication 4, dans lequel ledit agent collant est un agent collant migrant.

6. Film étirable multicouche selon la revendication 5, dans lequel l'agent collant migrant est présent à une teneur de 1 à 15 % en poids relativement au poids total de la couche centrale.

7. Film étirable multicouche selon l'une quelconque des revendications précédentes, comprenant en outre un agent sélectionné parmi un pigment additionnel et un stabilisant aux UV.

8. Film étirable multicouche selon la revendication 1, ledit film étirable multicouche comprenant de 2 à 5 couches centrales.

9. Film étirable multicouche selon la revendication 1, le film étirable multicouche ayant une épaisseur totale de 8 à 50 µm.

10. Film étirable multicouche selon la revendication 1, dans lequel la couche centrale a une épaisseur de 0,5 à 45 µm.

11. Film étirable multicouche selon la revendication 1, dans lequel ledit carbonate de calcium est modifié en surface.

12. Film étirable multicouche selon la revendication 1, dans lequel ledit carbonate de calcium est un matériau particulaire ayant une taille de particule moyenne (D50) de 0,5 à 5 µm et/ou ayant une coupe granulométrique d98 % (D98) de 5 à 20 µm.

13. Film étirable multicouche selon la revendication 1, ledit film étirable multicouche ayant une perméabilité à l'oxygène inférieure à 1 700 cm³/m²/24 h mesurée selon ASTM D-1434.

14. Film étirable multicouche selon la revendication 1, ledit film étirable multicouche ayant une transparence de 50 à 75 % mesurée selon ASTM D-1003.

15. Film étirable multicouche selon la revendication 1, lequel est non poreux.

16. Procédé de fabrication d'un film étirable multicouche, ledit film étant un film agricole d'enveloppement de balles ou d'ensilage, comprenant les étapes qui consistent à :
a) fournir une première composition extrudable comprenant au moins une polyoléfine et du carbonate de calcium ;
b) fournir au moins une composition extrudable additionnelle comprenant au moins un polymère ;
c) extruder la première composition obtenue à l'étape a) pour former une couche centrale ;
d) extruder ladite au moins une composition extrudable additionnelle pour former deux couches extérieures sur des côtés opposés de la couche centrale,
dans lequel ladite couche centrale comprend du carbonate de calcium à une teneur de 0,1 à 10 % en poids relativement au poids total du film étirable multicouche, et de 0,5 à 5 % en poids relativement au poids total de la couche centrale, et un polyéthylène de basse densité linéaire à une teneur de 70 à 95 % en poids relativement au poids total de la couche centrale, et
dans lequel lesdites couches extérieures ont une teneur en carbonate de calcium inférieure à 0,1 % en poids relativement au poids total du film étirable multicouche.

17. Procédé selon la revendication 16, dans lequel les étapes c) et d) sont exécutées simultanément par coextrusion.

18. Procédé selon la revendication 16, dans lequel ladite couche centrale comprend un polyéthylène de basse densité linéaire à une teneur de 75 à 90 % en poids relativement au poids total de la couche centrale.
